# FASCICULE DE BREVET EUROPEEN

(11) **EP 0 949 762 B1**
(45) Date de publication et mention de la délivrance du brevet: **01.03.2006**
(21) Numéro de dépôt: 99200991.0
(22) Date de dépôt: 30.03.1999
(51) Int. Cl.: H04B 1/20, H04N 5/44, H04L 29/06

(54) **Système audiovisuel constitué de plusieurs appareils dont certains sont constitués de plusieurs modules fonctionnels**
Audiovideosystem mit mehreren Geräten, wo einigen von diesen Geräten mehrere funktionelle Module haben
Audiovisual system with several devices some of which have more than one functional module

(30) Priorité: 07.04.1998 FR 9804319
(43) Date de publication de la demande: 13.10.1999
(73) Titulaire: Koninklijke Philips Electronics N.V., 5621 BA Eindhoven (NL)
(72) Inventeur: Stumm, Francis, 75008 Paris (FR)
(74) Mandataire: Charpail, François

(56) Documents cités:
- EP-A- 0 471 615
- EP-A- 0 784 401
- EP-A- 0 812 091
- US-A- 5 712 834

## Description

La présente invention concerne un système audiovisuel constitué de plusieurs appareils dont certains sont constitués de plusieurs modules fonctionnels, et qui sont reliés par un bus, au moins un de ces appareils étant muni d'un processeur et de moyens de réception de commandes de la part d'un usager.

Elle concerne aussi un appareil destiné à faire partie d'un système audiovisuel constitué de plusieurs appareils dont certains sont constitués de plusieurs modules fonctionnels, appareil muni de moyens pour envoyer / recevoir des données sur un bus, d'un processeur et de moyens de réception de commandes de la part d'un usager.

Un système selon le préambule ci-dessus est connu du document EP-A-0 580 211. Selon ce document, un système domestique comporte une pluralité d'appareils distincts interconnectés par un réseau de contrôle, et l'un des appareils dit supérieur est muni d'actuateurs tels que des boutons, permettant d'activer n'importe lequel des appareils à partir de l'appareil supérieur.

Un objet de l'invention est d'augmenter les possibilités d'un tel système.

A cet effet, le bus étant capable de transmettre des données vidéo, le processeur est muni de moyens pour interpréter une commande d'association de modules et pour, en réponse à une telle commande, sélectionner des modules fonctionnels dans plusieurs appareils à la fois, commander la mise en fonction de ces modules et l'établissement d'échanges de données entre ces modules.

L'invention est donc basée sur l'idée de constituer un appareil en quelque sorte virtuel par l'association de modules fonctionnels se trouvant dans des appareils distincts.

Des modes particuliers de réalisation apparaissent dans les revendications dépendantes 2 à 9.

Dans un appareil, le bus étant d'un modèle capable de transmettre des données vidéo, le processeur est muni de moyens pour recevoir de la part d'un usager une commande lui demandant de réaliser une fonction particulière qui implique d'associer plusieurs modules fonctionnels dans des appareils séparés, et des moyens pour, en réponse à une telle commande, appliquer sur le bus des commandes de sélection des dits modules, des commandes de mise en fonction de ces modules et des commandes d'établissement d'échanges de données entre ces modules.

Ces aspects de l'invention ainsi que d'autres aspects plus détaillés apparaîtront plus clairement grâce à la description suivante d'un mode de réalisation constituant un exemple non limitatif.

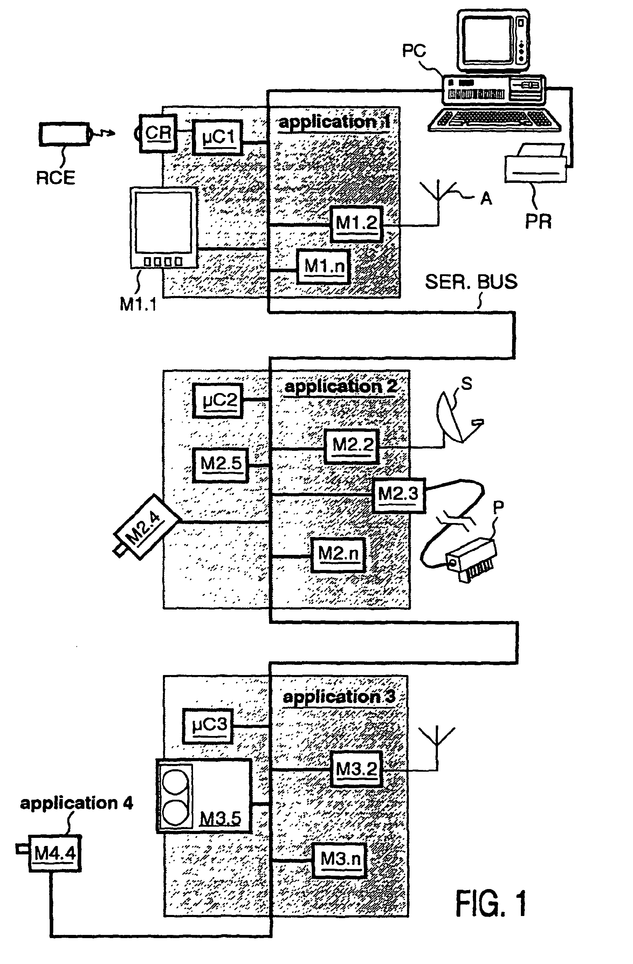

La figure 1 représente schématiquement un système audiovisuel selon l'invention.

Le système audiovisuel de la figure 1 est constitué de plusieurs appareils indiqués par le terme « application ». L'appareil « application 1 » comprend plusieurs modules fonctionnels M1.1 à M1.n ; l'appareil « application 2 » comprend plusieurs modules fonctionnels M2.1 à M2.n, et ainsi de suite. Ces appareils sont reliés entre eux par un bus SER.BUS capable de transmettre des données de commande ou d'information et aussi des données vidéo. Un ou plusieurs modules fonctionnels sont reliés directement au bus à l'intérieur des appareils. Ce bus est par exemple un bus série du type normalisé « IEEE1394», dont le débit peut atteindre 400 Mbps.

L'appareil « application 1 » est par exemple un récepteur de télévision numérique muni d'un processeur µC1 et de moyens de réception de commandes de la part d'un usager, ici un système connu en soi de télécommande constitué d'un émetteur de télécommande RCE qui envoie des signaux lumineux infrarouges, et d'un récepteur CR, lui-même relié au processeur µC1. Le module fonctionnel M1.1 est un afficheur graphique, le module fonctionnel M1.2 est un syntoniseur qui reçoit des signaux de télévision numérique par une antenne terrestre A.

L'appareil « application 2 » est par exemple un récepteur-décodeur de télévision par satellite également muni d'un processeur µC2 et dont le module M2.2 est un syntoniseur qui reçoit des signaux de télévision par une antenne satellite S, le module fonctionnel M2.5 est un décodeur/désembrouilleur, et le module fonctionnel M2.3 est un modem relié par une ligne téléphonique à un serveur non représenté pour la gestion des paiements de l'usager, par exemple pour le paiement à la séance de visionnage d'un film.

L'appareil « application 3 » est par exemple un magnétoscope numérique muni d'un processeur µC3 et dont un module fonctionnel M3.5 est une unité de lecture/écriture de cassette et un autre module fonctionnel M3.2 est un syntoniseur analogique muni d'un convertisseur analogique/numérique.

L'appareil « application 2 » pourrait aussi être par exemple un appareil de vidéoconférenoe, dont le module fonctionnel M2.3 est un modem et le module fonctionnel M2.4 est une caméra de prise de vues avec microphone.

Dans l'appareil « application 3 », le module fonctionnel M3.5 pourrait aussi être un enregistreur/lecteur de DVD RAM ou DVD RW.

L'appareil « application 4 » est une caméra de surveillance.

Un appareil muni d'un processeur peut aussi être un ordinateur personnel connecté au système audiovisuel, comme indiqué sous la référence « PC ». Il est muni d'un port de liaison avec le bus IEEE1394 reliant les appareils du système.

Chaque unité physique présente sur le bus peut donc être décomposée en plusieurs sous-unités ou modules fonctionnels autonomes. Dès qu'un module fonctionnel est relié au bus numérique, il devient disponible pour les autres modules, même si ces derniers sont situés dans des appareils différents.

Dans l'appareil. « application 1 », le processeur µC1 est muni de moyens, c'est-à-dire d'un logiciel, pour interpréter une commande reçue de l'usager via les éléments RCE et CR, et demandant d'associer des modules. En réponse à une telle commande, le processeur sélectionne des modules fonctionnels dans plusieurs appareils à la fois, il commande la mise en fonction de ces modules et l'établissement d'échanges de données entre ces modules de façon à réaliser l'appareil virtuel demandé. Une telle association ne serait pas possible sans le bus.

Une telle demande peut être de types très variés, par exemple :
- associer l'imprimante PR de l'ordinateur PC avec le modem M2.3 de l'appareil « application2 » pour constituer un appareil de fac-similé, sans l'ordinateur,
- associer l'afficheur graphique M1.1 de l'appareil « application1 » au modem M2.3 de l'appareil « application2 » pour constituer un « Minitel », ou un navigateur "Internet".
- associer le modem M2.3 à l'enregisbeur M3.5 pour acquérir sur « Internet » des cédéroms et les enregistrer localement
- associer les modules M2.2, M2.5, et M3.5 pour recevoir et désembrouiller des émissions et les enregistrer.
- associer le module syntoniseur analogique M3.2 muni d'un convertisseur analogique /numérique avec l'enregistreur M3.5 pour enregistrer des émissions en analogique sur le DVD.
- associer plusieurs caméras telles que M4.4 ainsi que la caméra M2.4 et le modem M2.3 pour une surveillance à distance.

Bien que le produit constitué par ces associations soit virtuel, il faut tout de même exécuter son application quelque part. Plusieurs solutions sont possibles :
- l'unité d'affichage principale M1.1 peut avec le processeur µC1 se comporter comme un ordinateur et exécuter l'application en local.
- n'importe quelle autre unité peut se comporter en maître et piloter les autres sous-unités utiles à la composition du produit virtuel. Dans ce cas le téléviseur ne sert que pour l'interface avec l'usager.

Un tel produit virtuel peut être introduit dans un appareil existant :
- par téléchargement d'un logiciel via le récepteur satellite, comme une application de type guide de programme électronique,
- par téléchargement d'un logiciel via « Internet »,
- au moyen d'un « PC », avec ses moyens habituels de chargement de programme,
- au moyen du magnétoscope numérique « application 3 », chargé d'une cassette ou d'un DVD-ROM adéquat

Il est clair que bien d'autres possibilités que celles décrites ci-dessus sont ouvertes, par exemple le module M3.2 peut être un syntoniseur numérique, l'appareil « application 1 » un récepteur analogique dans lequel le module M1.2 est un syntoniseur analogique associé à un convertisseur analogique / numérique, le modem peut être d'un modèle à transmission radio « DECT » ou « GSM », il peut être dans l'ordinateur, etc.

## Revendications

1. Appareil destiné à faire partie d'un système audiovisuel constitué de plusieurs appareils dont certains sont constitués de plusieurs modules fonctionnels (M1.1 à M1.n), appareil muni de moyens pour envoyer et/ou recevoir des données sur un bus (SER.BUS), d'un processeur (µC1) et de moyens de réception de commandes de la part d'un usager, **caractérisé en ce que**, le bus étant d'un modèle capable de transmettre des données vidéo, le processeur est muni de moyens pour recevoir (RCE, CR) de la part d'un usager une commande lui demandant de réaliser une fonction particulière qui implique d'associer plusieurs modules fonctionnels dans des appareils séparés, et des moyens pour, en réponse à une telle commande, appliquer sur le bus des commandes de sélection des dits modules, des commandes de mise en fonction de ces modules et des commandes d'établissement d'échanges de données entre ces modules.

2. Système audiovisuel constitué de plusieurs appareils selon la revendication 1 dont certains sont constitués de plusieurs modules fonctionnels (M1.1 à M1.n), et qui sont reliés par le bus (SER.BUS).

3. Système audiovisuel selon la revendication 2, **caractérisé en ce que** l'un des appareils muni d'un processeur est un ordinateur personnel muni d'un port de liaison avec le bus reliant les appareils.

4. Système audiovisuel selon la revendication 2, **caractérisé en ce que** l'un des appareils est un récepteur de télévision numérique dont un module fonctionnel est un afficheur graphique, et un autre module fonctionnel est un tuner de réception de télévision par voie terrestre.

5. Système audiovisuel selon la revendication 2, **caractérisé en ce que** l'un des appareils est un récepteur de télévision par satellite dont un module fonctionnel est un désembrouilteur, et un autre module fonctionnel est un modem pour la gestion des paiements d'un usager.

6. Système audiovisuel selon la revendication 2, **caractérisé en ce que** l'un des appareils est un enregistreur/lecteur de DVD RAM ou de DVD RW.

7. Système audiovisuel selon la revendication 2, **caractérisé en ce que** l'un des appareils est un magnétoscope numérique dont un module fonctionnel est une unité de lecture/écriture de cassette numérique ou de DVD, et un autre module fonctionnel est un syntoniseur analogique avec convertisseur analogique/numérique.

8. Système audiovisuel selon la revendication 2, **caractérisé en ce que** l'un des appareils est un appareil de vidéoconférence, dont un module fonctionnel est un modem et un autre module fonctionnel est une caméra de prise de vues avec microphone.

9. Système audiovisuel selon la revendication 8, **caractérisé en ce que** l'un des appareils est une caméra de surveillance.

## Claims

1. An appliance intended to form part of an audiovisual system formed by various appliances some of which are formed by various functionality modules (M1.1 to M 1.n), which appliance comprises means for sending and/or receiving data over a bus (SER.BUS), a processor (µC1) and receiving means for receiving commands from a user, **characterized in that**, while the bus is of a model that can transmit video data, the processor includes means for receiving (RCE, CR) a command from a user requesting the processor to execute a particular function that implies the combination of more than one functionality module in separate appliances and means for sending over the bus, in response to such a command, selection commands of said modules, commands to switch on these modules and commands to establish data exchanges between these modules.

2. An audiovisual system formed by various appliances as claimed in claim 1, some of which are formed by more than one functionality module (M1.1 to M 1.n) and which are connected by the bus (SER.BUS).

3. An audiovisual system as claimed in claim 2, **characterized in that** one of the appliances having a processor is a personal computer with a port for connection to the bus connecting the appliances.

4. An audiovisual system as claimed in claim 2, **characterized in that** one of the appliances is a digital television receiver of which one functionality module is a graphics display, and another functionality module is a tuner for terrestrial television reception.

5. An audiovisual system as claimed in claim 2, **characterized in that** one of the appliances is a satellite television receiver of which one functionality module is a descrambler and another functionality module is a modem for managing payments by a user.

6. An audiovisual system as claimed in claim 2, **characterized in that** one of the appliances is a DVD RAM or DVD RW reader/writer.

7. An audiovisual system as claimed in claim 2, **characterized in that** one of the appliances is a digital videorecorder of which one functionality module is a digital cassette or DVD read/write unit and another functionality module is an analog tuner with an analog/digital converter.

8. An audiovisual system as claimed in claim 2, **characterized in that** one of the appliances is a videoconference appliance of which one functionality module is a modem and another functionality module is a television camera with a microphone.

9. An audiovisual system as claimed in claim 8, **characterized in that** one of the appliances is a monitoring camera.

## Patentansprüche

1. Gerät als Teil eines Audiovideosystems mit mehreren Geräten, wobei einige von diesen Geräten mehrere funktionelle Module haben (M1.1 bis M1.n) und das Gerät mit Mitteln zum Senden/Empfangen der Daten über einen Bus (SER.BUS), mit einem Prozessor (µC1) und mit Mitteln für den im Auftrag eines Anwenders erteilten Empfang von Steuerungen ausgestattet ist, **dadurch gekennzeichnet, dass** der Bus ein für die Übertagung von Videodaten geeignetes Modell ist, der Prozessor mit Mitteln für den im Auftrag eines Anwenders erteilten Erhalt (RCE, CR) einer Steuerung ausgestattet ist, die ihn anweist, eine besondere Funktion auszuführen, welche die Verbindung mehrerer funktioneller Module in gesonderten Geräten einbezieht, und mit Mitteln, um als Reaktion auf solch eine Steuerung über den Bus Steuerungen zur Auswahl der besagten Module, Steuerungen zur Inbetriebnahme dieser Module und Steuerungen für den Aufbau des Datenaustauschs zwischen diesen Modulen durchzuführen.

2. Audiovideosystem, gebildet aus mehreren Geräte nach Anspruch 1, von denen manche aus mehreren funktionellen Modulen (M1.1 bis M1.n) gebildet und die über den Bus (SER.BUS) miteinander verbunden werden.

3. Audiovideosystem nach Anspruch 2, **dadurch gekennzeichnet, dass** eines der mit einem Prozessor ausgestatteten Geräte ein mit einem Verbindungsport zum Bus zur Verbindung der Geräte ausgestatteter Personalcomputer ist.

4. Audiovideosystem nach Anspruch 2, **dadurch gekennzeichnet, dass** eines der Geräte ein digitaler Fernsehempfänger mit einem funktionellen Modul als graphische Anzeigevorrichtung ist, und ein anderes funktionelles Modul ist ein terrestrischer Fernsehempfangstuner.

5. Audiovideosystem nach Anspruch 2, **dadurch gekennzeichnet, dass** eines der Geräte ein Satellitenfernsehempfänger mit einem funktionellen Modul als Entschlüssler ist, und ein anderes funktionelles Modul ist ein Modem für die Verwaltung der Zahlungen eines Anwenders.

6. Audiovideosystem nach Anspruch 2, **dadurch gekennzeichnet, dass** eines der Geräte ein DVD-RAM- oder DVD-RW-Aufzeichnungs/Abspiel-Gerät ist.

7. Audiovideosystem nach Anspruch 2, **dadurch gekennzeichnet, dass** eines der Geräte ein digitaler Videorecorder mit einem funktionellen Modul als Einheit zum Lesen/Schreiben einer digitalen Kassette oder DVD ist, und eine anderes funktionelles Modul ist ein analoges Abstimmgerät mit Analog/Digital-Wandler.

8. Audiovideosystem nach Anspruch 2, **dadurch gekennzeichnet, dass** eines der Geräte ein Videokonferenzgerät mit einem funktionellen Modul als Modem ist, und ein anderes funktionelles Modul ist eine Aufnahmekamera mit Mikrofon.

9. Audiovideosystem nach Anspruch 8, **dadurch gekennzeichnet, dass** eines der Geräte eine Überwachungskamera ist.
